# EUROPEAN PATENT SPECIFICATION

(11) **EP 3 015 352 B1**
(45) Date of publication and mention of the grant of the patent: **06.12.2017**
(21) Application number: 15192147.5
(22) Date of filing: 29.10.2015
(51) Int. Cl.: B62K 7/04

(54) **CARGO BICYCLE FRAME**
LASTENFAHRRAD
CADRE DE VÈLO CARGO

(30) Priority: 31.10.2014 IT MI20141868
(43) Date of publication of application: 04.05.2016
(73) Proprietor: Donati, Gabriel Paolo, 20127 Milano (MI) (IT)
(72) Inventor: DONATI, Gabriel Paolo, 20127 Milano MI (IT); DOCI, Giovanni, 6003 Luzern (CH); DIAMANTI, Gabriele, 20129 Milano Mi (IT)
(74) Representative: Spina, Alessandro

(56) References cited:
- EP-A1- 1 352 821
- WO-A1-2011/132185
- CN-Y- 201 205 954
- DE-U1-202014 005 627

## Description

The present invention generally relates to cargo or transport bicycles and in particular to a frame for said bicycles.

A cargo bicycle is a particular type of bicycle whose frame comprises a longitudinal portion which extends forward beyond the head tube or rearward beyond the seat post, thus providing room for the mounting of a loading platform, a bin or other supporting means such as e.g. seats for transporting children. Such longitudinal portion may be simply an extension of one of the frame tubes, for example the top tube, or a structure consisting of longitudinal and transverse members arranged so as to form a loading platform.

The longitudinal portion of the frame of the most widespread cargo bicycles on the market extends forward beyond the head tube and, for stability reasons, the fork is typically arranged at the free end of the longitudinal portion of the frame, where a further head tube housing a fork steerer tube is arranged. The frame thus comprises a first head tube configured to receive a first steerer tube adapted for the mounting of a handlebar and a second head tube configured to receive a second steering tube associated with a fork.

In order to allow steering of the vehicle, the steerer tube fitted in the first head tube typically comprises an end portion transversely protruding therefrom and a rod pivotally restrained to the end portion. The rod extends longitudinally and is in turn pivoted on the fork. The end portion of the steerer tube, the rod and the pivot connection means form a kinematic chain which allows to rotate the fork around its axis consistently with the rotation of the handlebar.

Also known are drive cable assemblies that employ pairs of sheathed cables restrained at one end to a first pulley associated with the steerer tube fitted in the first head tube and at the opposite end to a second pulley associated with the steerer tube fitted in the second tube. The cables are restrained to the pulleys at different points of their circumference, thus determining by pulling their rotation in one direction or in the opposite direction. Another known frame is disclosed in DE U202014005627, considered the closest prior art.

The main problem of cargo bikes is the large size of their frame in the longitudinal direction, which makes it very difficult to park a cargo bicycle in parking areas dedicated thereto.

Furthermore, if the length of the vehicle derives from the need to have a portion of its frame suitable to accommodate a loading platform or other supporting means, the whole length is not necessary when the supporting means are not used, i.e. when the bicycle is simply used as a locomotion means. This strongly limits the use of cargo bicycles.

There is therefore the need to improve the cargo bicycles and in particular their frames, which is an object of the present invention. Said object is achieved with a cargo bicycle frame whose main features are specified in the first claim, while other features are specified in the remaining claims.

An idea of solution underlying the invention is to provide a frame for cargo bicycles of a transformable type, and in particular a frame that may be shortened in the longitudinal direction between an extended position wherein the fork is spaced apart from the first head tube and a retracted position wherein the fork is close to the first head tube.

Thanks to this configuration it is possible to reduce the size of the frame in the longitudinal direction, and therefore the size of a cargo bicycle that comprises such a frame, whenever the use of a loading platform or of a similar supporting means is not required.

To this aim, the top tube of the frame has a telescopic structure comprising an outer tubular member and an inner tubular member slidably restrained thereto in the longitudinal direction. The frame comprises a first head tube wherein a first steerer tube configured for the mounting of a handlebar is fitted and a second head tube configured to receive a second steerer tube associated with a fork. The first head tube is restrained to the outer tubular member, while the second head tube is restrained to the inner tubular member, thus allowing the displacement of the fork from the extended position to the retracted position of the frame and vice versa.

According to an embodiment of the invention, in the retracted position of the frame the second head tube is aligned and arranged coaxially to the first head tube, so that the frame has a minimum size and a single steering axis as a conventional bicycle frame. In this configuration, the fork may advantageously be rotatably restrained to the steerer tube fitted in the first head tube, thus achieving a steering system of a traditional type.

Thanks to this combination of features, in the retracted position, the frame has an appearance and a size in the longitudinal direction entirely similar to those of a traditional bicycle frame. In the extended position the frame instead has all the features of a tradition cargo bicycle frame, wherein the fork is driven through a kinematic chain restrained to an end portion of the steerer tube on which the handlebar is mounted.

The inner tubular member and the outer tubular member of the top tube are configured so as to have matching shapes in cross section, namely shaped so as to form a shape coupling suitable to prevent their mutual rotation. Thanks to this feature, it is possible to ensure the alignment between the axis of the steerer tube of the handlebar and the axis of the steerer tube of the fork, which is a necessary condition to drive a bicycle.

According to an embodiment of the invention, in the retracted position of the frame the inner tubular member of the top tube protrudes beyond the outer tubular member in the longitudinal direction and the frame comprises a loading platform mounted, preferably in a detachable manner, on the protruding portion of the inner tubular member.

The loading platform may advantageously have an accordion structure comprising a plurality of panels pivotally restrained to one another, wherein a first panel is connected to the protruding portion of the inner tubular member. By bringing the frame in the extended position it is possible to rotate the panels relative to one another so that they form a single loading platform on the inner tubular member.

According to an embodiment of the invention, the loading platform also comprises a second panel restrained to the first head tube and further panels arranged between them. The first panel is thus movable with the inner tubular member, whereas the second panel is fixed. The overall configuration is such that in the retracted position of the frame the further panels abut each other and rest on the second panel, thus giving the loading platform the appearance of a common carrier, whereas in the extended position of the frame the further panels rest on the inner tubular member and are substantially coplanar with the first panel, thus forming an extended loading platform. This configuration is advantageous in that the transformation of the frame from the retracted position to the extended position and vice versa causes the transformation of the loading platform by virtue of the constraints described above.

Further advantages and features of the cargo bicycle frame according to the present invention will become clear to those skilled in the art from the following detailed and non-limiting description of embodiments thereof, with reference to the accompanying drawings in which:
- Figures 1 and 2 are respectively a perspective view and a side view showing a cargo bicycle comprising a frame according to the present invention;
- Figures 3 and 4 are respectively a perspective view and a side view showing the cargo bicycle of Figures 1 and 2 with the frame in a retracted configuration;
- Figure 5 shows a detail V of Figure 3;
- Figures 6 to 9 show a preferred embodiment of the cargo bicycle frame according to the invention.

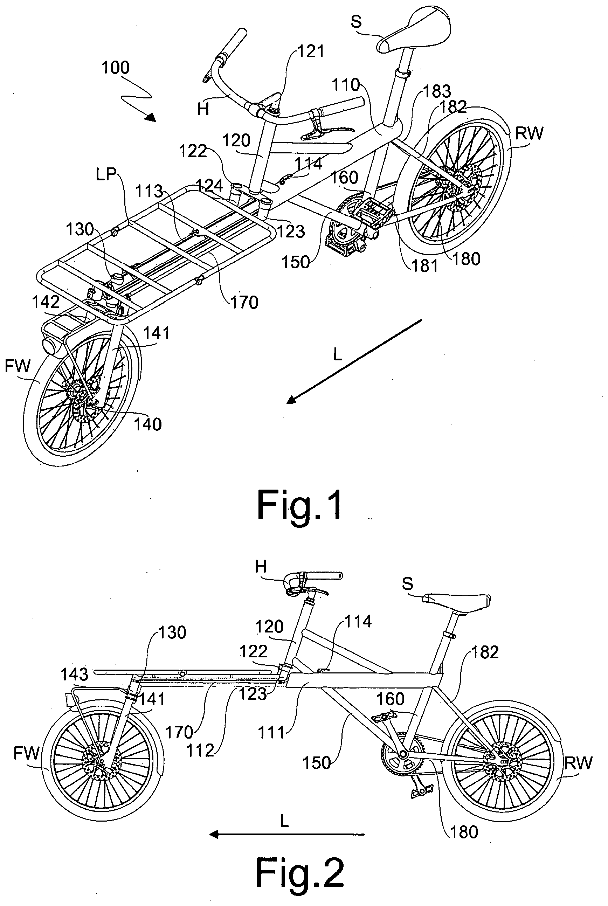

Referring to figures 1 to 5, a cargo bicycle frame according to the invention is generally indicated by the reference numeral 100.

The frame 100 comprises in a known manner a top tube 110 which extends in a longitudinal direction L, a first head tube 120 to which a first steerer tube 121 configured for the mounting of a handlebar H is associated, and a second head tube 130 to which a fork 140 intended to receive a front wheel FW of a bicycles rotatably connected. The top tube 110 extends beyond the first head tube 120 in the longitudinal direction L and the second head tube 130 is restrained at the free end of the top tube 110.

The fork 140 includes a steerer tube (not shown) fitted and axially restrained to the second head tube 130.

The frame 100 also comprises a down tube 150 and a seat tube 160 wherein a seat post of a saddle S may be fitted. The down tube 150 and the seat tube 160 are respectively restrained at one of their ends to the top tube 110 and at the opposite end to each other at a node of the frame 100 configured to house a bottom bracket.

In order to allow to steer a bicycle, the fork 140 is restrained in a known manner to an end portion 122 of the first steerer tube 121 through a kinematic chain comprising at least one rod 170 pivoted at one end to the end portion 122 and at the opposite end to the fork 140 on one of its legs 141, 142, for example on the leg 141. As shown in figures 1 and 2, the end portion 122 protrudes from the first steerer tube 121 from an end thereof opposite to the end at which the handlebar H may be mounted.

The frame also comprises pairs of chain stays 180, 181 and seat stays 182, 183 restrained to the seat tube 160, which define therewith a rear portion of the frame 100 intended to receive the rear wheel RW of a bicycle.

In the embodiment show in the figures, the frame 100 has for example a size for a person of medium size and is configured for mounting 20" wheels.

The frame size and the diameter or diameters of the wheels are non-essential features of the invention.

The portion of the top tube 110 arranged between the first and the second head tube 120, 130 is configured for the mounting, preferably in a removable manner, of a loading platform LP or of another supporting means such as, for example, seats for transporting children. To this purpose threaded holes, slots and similar anchoring means may be provided.

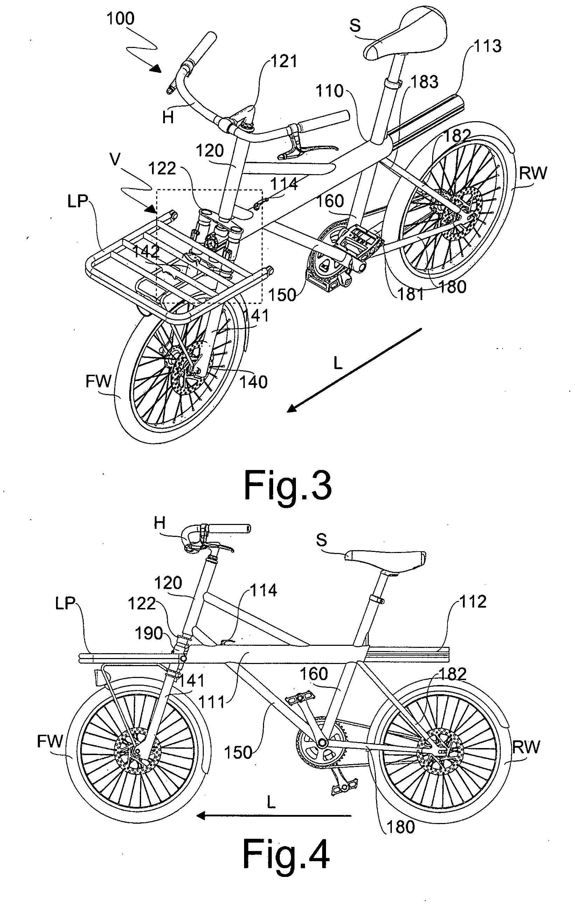

According to the invention, the top tube 110 has a telescopic structure comprising an outer tubular member 111, e.g. having a cylindrical shape, and an inner tubular member 112, e.g. also having a cylindrical shape, slidably fitted in the outer tubular member 111 and axially movable relative thereto between a first extended position, shown in Figures 1 and 2, and a second retracted position, shown in Figures 3 and 4. The movement of the inner tubular member 112 substantially occurs in the longitudinal direction L.

The first head tube 120 is restrained to the outer tubular member 111 and the second head tube 130 is restrained to the inner tubular member 112, for example at its free end, as shown in Figures 1 to 5. The second head tube 130 is therefore movable with the inner tubular member 112.

In the first extended position the configuration of the frame 100 is that of a typical cargo bicycle as described above, wherein the fork 140 is longitudinally spaced from the head tube 120 wherein the steerer tube 121 on which the handlebar H is fixed is mounted.

In the second retracted position, shown in figure 2, the inner tubular member 112 is retracted in the outer tubular member 111 thus reducing the distance between the fork 140 and the head tube 120, and therefore the overall size of the frame 100, in the longitudinal direction L.

The frame 100 further comprises means for mutually locking the inner tubular member 112 and outer tubular member 111 in the extended and retracted positions. The locking means may be screws, cam lockable collars and the like. In the illustrated embodiment the inner tubular member 112 comprises a groove 113 stretching out in the direction of the axis and whose cross section has e.g. the shape of an inverted T. On the outer tubular member 111 a cam lever 114 is e.g. arranged, which cooperates with a screw (not shown) whose head is slidably fitted into the groove 113. By operating the cam lever 114 the screw head is pressed against the inverted T shaped profile of the groove 113 thus blocking by friction the inner tubular member 112 on the outer tubular member 111.

In order to go from the first extended position to the second retracted position, the loading platform LP must be disassembled from the inner tubular member 112. The locking means, e.g. the cam lever mechanism 114, are then operated so as to unlock the inner tubular member 112 which can thus be moved backwards into the outer tubular member 111 up to a position desired by a user. Once reached this position, the locking means are operated again so as to lock the inner tubular member 112.

In the second retracted position the loading platform LP may advantageously be folded, for example into two halves, and placed on a carrier of the frame 100, that may be e.g. mounted on the fork 140 as shown in the illustrated embodiment.

Moreover, depending on the size of the frame in the extended position, the inner tubular member 112 may be completely fitted into the outer tubular 111, thus not being visible from the outside, or protrude therefrom rearward beyond the seat tube 160 as shown in Figures 3 and 4.

According to an embodiment of the invention, in the second retracted position of the frame 100 the configuration of the telescopic top tube 110 is such that the second head tube 130 is coaxial with the first head tube 120. The size of the frame 100 is thus reduced to a minimum in the longitudinal direction L. The frame size is substantially that of a traditional city bicycle frame.

In this configuration, the fork 140 may advantageously be connected directly to the first steering tube 121, thus allowing to obtain a single steering axis. The rod 170 connecting the end portion 122 of the first steerer tube 121 to the fork 140 can be disassembled and placed e.g. inside the inner tubular member 112.

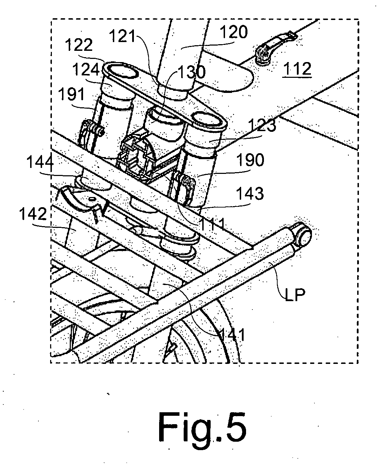

With particular reference to figure 5, an exemplary embodiment of the direct connecting means between the fork 140 and the first steering tube 121 is disclosed.

The fork 140 includes at least one tail portion 143, e.g. having a cylindrical shape, which extends from one of its legs 141, 142 toward the first steering tube 121. Correspondingly, the end portion 122, which in the illustrated embodiment is a plate, includes a protruding portion 123, e.g. having a cylindrical shape too, which extends toward the leg of the fork 140 on which the tail portion 143 is formed. The overall configuration of the first steerer tube 121 and the fork 140 is such that the protruding portion 123 and the tail portion 143 are aligned and coaxial with each other in the retracted position of the frame 100. The protruding portion 123 and the tail portion 143 may be made mutually integral by using coupling means such as, for example, a sleeve 190, which may be associated with the tail portion 143, as in the illustrated embodiment, or to the protruding portion 123, or be partially formed on both sides.

In the illustrated embodiment the fork 140 particularly comprises two tail portions 143, 144, e.g. having a cylindrical shape, respectively, which extend from each of its legs towards the first steerer tube 121. Correspondingly, the end portion 122 of the steerer tube 121 includes two protruding portions 123, 124, e.g. having a cylindrical shape too, which extend towards the fork 140 and are respectively aligned and coaxial with the tail portions 143, 144 of the fork 140 in the retracted configuration of the frame 100. The coupling means may for example consist of two sleeves 190, 191 respectively associated to the tail portions 143, 144.

This configuration advantageously provides a more secure and robust anchoring between the fork 140 and the first steerer tube 121.

The sleeve or sleeves 190, 191 are preferably configured to be elastically deformable in the radial direction and to this aim feature respective axial slits. This configuration allows to tighten each sleeve on the relevant protruding portion 123, 124 and tail portion 143, 144 e.g. by operating a cam lever as shown in figure 5.

Alternatively, the sleeve or sleeves could comprise a threaded internal profile suitable to engage a corresponding threaded profile externally formed on the tail portions 143, 144 of the fork 140, or on the protruding portions 123, 124 of the end portion 122.

It will be appreciated that the coupling means described above are not limited to sleeves, latching elements connectable between the protruding portions 123, 124 of the end portion 122 and the tail portions 143, 144 of the fork 140 being also suitable for this purpose, as well as snap pins fitted in one between the protruding portions 123, 124 of the end portion 122 and the tail portions 143, 144 of the fork 140, suitable to engage the other one between the protruding portions 123, 124 and the tail portions 143, 144.

The outer tubular member 111 and the inner tubular member 112 of the top tube 110 are configured such that the respective cross sections have complementary matching shapes, i.e. shaped so as to form a shape coupling suitable to prevent their mutual rotation. A rotation between the two members forming the top tube 110 may in fact lead to a misalignment between the axes of the first and second head tubes, thus making it impossible to drive the bicycle.

As mentioned above, in the illustrated embodiment the inner tubular member 112 has a cylindrical shape and comprises at least one groove 113 formed on its cylindrical surface in the axial direction. The outer tubular member 111, also having a cylindrical shape, comprises at least one member (not shown) protruding radially inwards and configured to engage the longitudinal groove 113.

Alternatively, the shape coupling could be achieved by using inside and outer tubular members having a prismatic shape, for example with an hexagonal cross section.

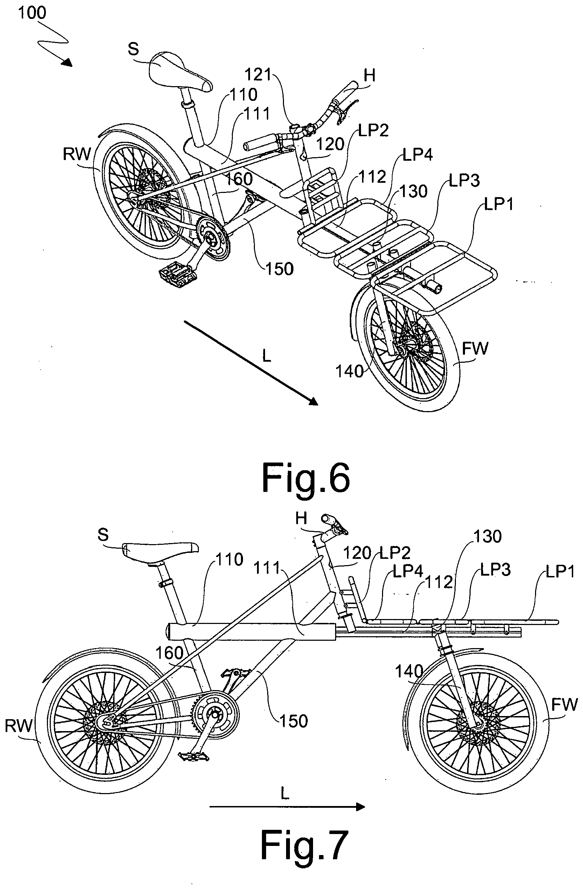

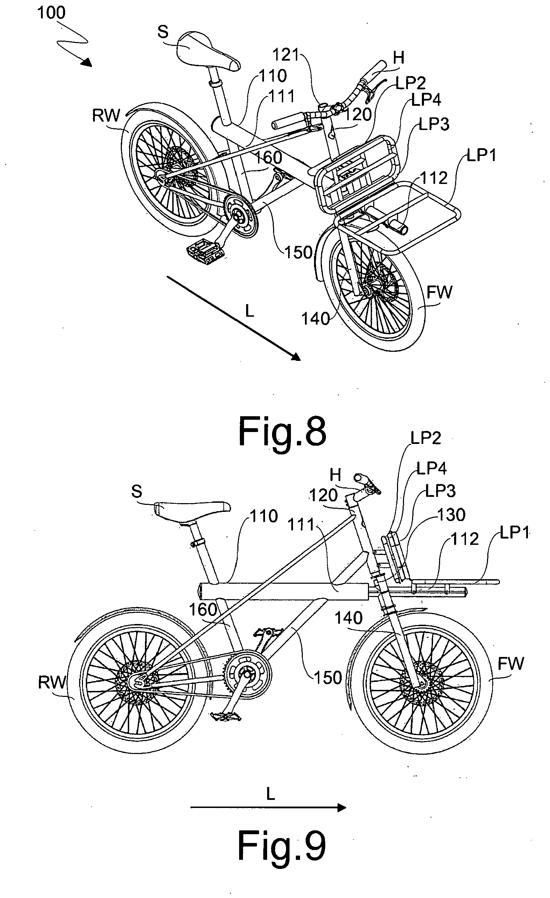

Now referring now to figures 6 to 9, according to an alternative embodiment of the invention the top tube 110 is configured such that in the retracted position of the frame the inner tubular member 112 protrudes beyond the outer tubular member 111 in the longitudinal direction L.

The loading platform LP is mounted, preferably detachably, on the protruding portion of the inner tubular member 112.

The loading platform LP may advantageously have an accordion structure comprising a plurality of panels pivotally restrained to each other, wherein a first panel LP1 is restrained to the protruding portion of the inner tubular member 112.

By bringing the frame 100 in the extended position, it is possible to rotate the panels relative to one another so that they form with the first panel LP1 a single supporting platform supported by the inner tubular member 112.

In the embodiment shown in figures 6 to 9, the loading platform also advantageously comprises a second panel LP2 restrained to the first head tube 120, the further panels of the loading platform LP, in particular a third and a fourth panel LP3 and LP4 being arranged between them. The first panel LP1 is therefore movable with the inner tubular member, whereas the second panel LP2 is fixed.

The overall configuration is such that in the retracted position of the frame 100 the panels LP3, LP4 abut one another and e.g. rest on the second panel LP2, so that the loading platform looks like a common carrier, while in the extended position of the frame 100 the panels LP3, LP4 rest on the inner tubular member 112 and are substantially coplanar with the first panel LP1, thus forming an extended loading platform. This configuration offers the advantage that the transformation of the frame 100 from the retracted position to the extended one and vice versa determines the transformation of the loading platform LP by virtue of the constraints described above, no specific maneuver being required to a user.

Unlike the embodiment shown in figures 1 to 5, according to this embodiment, the frame 100 does not need any carrier, since this is formed by the loading platform LP in its retracted configuration. In addition to this, since the protruding portion of the inner tubular member 112 may be used for the loading platform, the movement of the inner tubular member in the longitudinal direction L shorter than the movement of the same member of the first embodiment. Hence, the inner tubular member 112 shall not protrude from the outer tubular member 111 rearward beyond the seat tube 160, which limits the length of the seat post.

The present invention has hereto been described with reference to preferred embodiments thereof. It will be appreciated that there may be other embodiments relating to the same inventive idea, as defined by the scope of protection of the claims set forth below.

## Claims

1. A frame (100) for a cargo bicycle, said frame comprising a top tube (110) extending in a longitudinal direction (L) of the frame (100), a first head tube (120) associated with a first steerer tube (121) configured to allow mounting of a handlebar (H), a second head tube (130) and a fork (140) rotatably restrained to said second head tube (130), wherein said top tube (110) extends beyond the first head tube (120) in said longitudinal direction (L) and wherein the second head tube (130) is restrained to the top tube (110), **characterized in that** the top tube (110) has a telescopic structure comprising an outer tubular member (111) and an inner tubular member (112) slidably fitted in said outer tubular member (111) said first head tube (120) being restrained to said outer tubular member (111) and said second head tube (130) being restrained to said inner tubular member (112), and **in that** the inner tubular member (112) is axially movable relative to the outer tubular member (111) between a first extended position wherein the second head tube (130) and the fork (140) are spaced from the first head tube (120) in the longitudinal direction (L) and a second retracted position wherein the second head tube (130) and the fork (140) are close to the first head tube (120), whereby said second position is closer to the first head tube (120) than the first position.

2. A frame (100) according to claim 1, wherein in said retracted position the second head tube (130) is aligned and coaxial with the first head tube (120).

3. A frame (100) according to claim 2, wherein the first steerer tube (121) and the fork (140) comprise direct engaging means configured to allow mutual direct connection thereof, said direct engaging means comprising at least one tail portion (143) extending from one of the legs (141, 142) of the fork (140) towards the first steerer tube (121) and a protruding portion (123) that extends from an end portion (122) of the first steerer tube (121) towards the leg of the fork (140) on which said tail portion (143) is formed, the overall configuration of the first steerer tube (121) and the fork (140) being such that the protruding portion (123) and the tail portion (143) are aligned and coaxial in the retracted configuration of the frame (100), said direct engaging means further comprising coupling means of the protruding portion (123) and the tail portion (143).

4. A frame (100) according to claim 3, wherein said coupling means comprise a sleeve (190), said sleeve being slidably restrained to either the protruding portion (123) or the tail portion (143).

5. A frame (100) according to any one of claims 1 to 4, wherein the inner tubular member (112) and the outer tubular member (111) of the top tube (110) are configured such that their respective cross sections have matching shapes.

6. A frame according to claim 5, wherein the inner tubular member (112) comprises at least one groove (113) formed on its mantle in the direction of its axis and the outer tubular member (111) comprises at least one radially protruding member facing the inside of the outer tubular member and configured to engage said longitudinal groove (113).

7. A frame (100) according to any one of claims 1 to 6, wherein the top tube (110) is configured such that in the retracted position the inner tubular member (112) protrudes beyond the outer tubular member (111) in the longitudinal direction.

8. A frame (100) according to claim 7, further comprising a loading platform (LP), said loading platform (LP) being restrained to the portion of the inner tubular member (112) protruding beyond the outer tubular member (111) in the longitudinal direction (L).

9. A frame (100) according to claim 8, wherein said loading platform (LP) has an accordion structure comprising a plurality of panels pivotally restrained to one another, wherein a first panel (LP1) is restrained to the portion of the inner tubular member (112) protruding beyond the outer tubular member.

10. A frame (100) according to claim 9, wherein a second panel (LP2) of the loading platform (LP) is restrained to the first head tube (120) and further panels (LP3, LP4) of the loading platform (LP) are arranged between said first panel (LP1) and said second panel (LP2), the overall configuration being such that in the retracted position of the frame said further panels (LP3, LP4) abut each other and rest on one between the first panel (LP1) and the second panel (LP2), whereas in the extended position of the frame the further panels (LP3, LP4) rest on the inner tubular member (112) and are substantially coplanar with the first panel (LP1).

11. A cargo bicycle comprising a frame (100) according to any one of claims 1 to 10.

## Patentansprüche

1. Ein Rahmen (100) für ein Lastenfahrrad, wobei der besagte Rahmen ein sich in einer Längsrichtung (L) des Rahmens (100) erstreckendes Oberrohr (110) umfasst, ein erstes Steuerrohr (120), dem ein Lenkerrohr (121) zugeordnet ist, welches der Montage eines Fahrradlenkers (H) dient, ein zweites Steuerrohr (130) und eine Gabel (140), die im zweiten Steuerrohr (130) drehbar gelagert ist, wobei sich das Oberrohr (110) über das erste Steuerrohr (120) hinaus in der besagten Längsrichtung (L) erstreckt, und wobei das zweite Steuerrohr (130) an dem Oberrohr (110) gehalten ist, **dadurch gekennzeichnet, dass** das Oberrohr (110) eine Teleskopstruktur aufweist mit einem äußeren, rohrförmigen Element (111) und einem inneren, rohrförmigen Element (112), das in dem besagten, äußeren rohrförmigen Element (111) verschiebbar eingepasst ist, wobei das erste Steuerrohr (120) in dem besagten, äußeren rohrförmigen Element (111) gehalten ist, und wobei das besagte zweite Steuerrohr (130) in dem besagten, inneren rohrförmigen Element (112) gehalten ist, sowie dadurch, dass das innere rohrförmige Element (112) gegenüber dem äußeren rohrförmigen Element (111) axial beweglich ist zwischen einer ersten, ausgezogenen Position, in welcher das zweite Steuerrohr (130) und die Gabel (140) von dem ersten Steuerrohr (120) in der Längsrichtung (L) beabstandet sind, und einer zweiten, zurückgezogenen Position, in welcher sich das zweite Steuerrohr (130) und die Gabel (140) nahe bei dem ersten Steuerrohr (120) befinden, wobei die besagte, zweite Position näher bei dem ersten Steuerrohr (120) ist als die erste Position.

2. Ein Rahmen (100) gemäß Anspruch 1, wobei in der zurückgezogenen Position das zweite Steuerrohr (130) gegenüber dem ersten Steuerrohr (120) ausgerichtet und koaxial zu jenem ist.

3. Ein Rahmen (100) gemäß Anspruch 2, wobei das erste Lenkerrohr (121) und die Gabel (140) direkt ineinander greifende Mittel aufweisen, welche derart ausgelegt sind, dass ihre direkte, gegenseitige Verbindung möglich ist, wobei die besagten, direkt ineinander greifenden Mittel wenigstens ein Ausläuferteil (143) umfassen, das sich von den Vorderbeinen (141/142) der Gabel (140) in Richtung zu dem ersten Lenkerrohr (121) erstreckt, und ein hervorstehendes Teil (123), das sich von dem Endbereich (122) des ersten Lenkerrohrs (121) in Richtung zu demjenigen Bein der Gabel (140) erstreckt, an welchem das besagte Ausläuferteil (143) angeformt ist, wobei die Gesamtkonfiguration des ersten Lenkerrohrs (121) und der Gabel (140) derart ist, dass das hervorstehende Teil (123) und das Ausläuferteil (143) in dem zurückgezogenen Zustand des Rahmens (100) gegeneinander ausgerichtet und koaxial sind, wobei die besagten, direkt ineinander greifenden Mittel ferner ein Mittel zum Koppeln des hervorstehenden Teils (123) und des Ausläuferteils (143) aufweisen.

4. Ein Rahmen (100) gemäß Anspruch 3, wobei das besagte Kopplungsmittel eine Hülse (190) aufweist, wobei die besagte Hülse entweder an dem hervorstehenden Teil (123) oder an dem Ausläuferteil (143) verschiebbar gehalten ist.

5. Ein Rahmen (100) gemäß einem der Ansprüche 1 bis 4, wobei das innere, rohrförmige Element (112) und das äußere, rohrförmige Element (111) des Oberrohrs (110) so ausgelegt sind, dass ihre jeweiligen Querschnitte ineinander passende Formen haben.

6. Ein Rahmen gemäß Anspruch 5, wobei das innere, rohrförmige Element (112) wenigstens eine Nut (113) aufweist, die auf seiner Hülle in Richtung seiner Achse verläuft, und das äußere, rohrförmige Element (111) wenigstens ein radial herausragendes Teil aufweist, das der Innenseite des äußeren, rohrförmigen Elements zugewandt ist und so ausgelegt ist, dass es in die Nut (113) hineingreift.

7. Ein Rahmen (100) gemäß einem der Ansprüche 1 bis 6, wobei das Oberrohr (110) derart ausgelegt ist, dass in der zurückgezogenen Position das innere, rohrförmige Element (112) über das äußere, rohrförmige Element (111) in der Längsrichtung hervorsteht.

8. Ein Rahmen (100) gemäß Anspruch 7, ferner umfassend eine Ladefläche (LP) enthält, wobei die besagte Ladefläche (LP) an demjenigen Bereich des inneren, rohrförmigen Elements (112) gehalten ist, der gegenüber dem äußeren, rohrförmigen Element (111) in der Längsrichtung (L) hervorsteht.

9. Ein Rahmen (100) gemäß Anspruch 8, wobei die besagte Ladefläche (LP) eine Ziehharmonikastruktur mit einer Mehrzahl von miteinander schwenkbar verbundenen Paneelen aufweist, wobei das erste Paneel (LP1) an demjenigen Bereich des inneren, rohrförmigen Elements (112) gehalten ist, der über das äußere, rohrförmige Element hervorsteht.

10. Ein Rahmen (100) gemäß Anspruch 9, wobei ein zweites Paneel (LP2) der Ladefläche (LP) an dem ersten Gabelschaft (120) gehalten ist und weitere Paneele (LP3, LP4) der Ladefläche (LP) zwischen dem besagten, ersten Paneel und dem besagten, zweiten Paneel angeordnet sind, wobei die Gesamtkonfiguration derart ist, dass in der zurückgezogenen Position weitere Paneele (LP3, LP4) einander berühren und auf einem zwischen dem ersten Paneel (LP1) und dem zweiten Paneel (LP2) liegen, wobei in der zurückgezogenen Position des Rahmens die weiteren Paneele (LP3, LP4) auf dem inneren, rohrförmigen Element (112) liegen und mit dem ersten Paneel (LP1) substantiell in der selben Ebene ausgerichtet sind.

11. Ein Lastenfahrrad, das einen Rahmen (100) gemäß einem der Ansprüche 1 bis 10 aufweist.

## Revendications

1. Cadre (100) pour un vélo cargo, ledit cadre comprenant un tube supérieur (110) s'étendant dans une direction longitudinale (L) du cadre (100), un premier tube de direction (120) associé à un premier pivot de fourche (121) configuré pour permettre le montage d'un guidon (H), un second tube de direction (130) et une fourche (140) retenue, en rotation, sur ledit second tube de direction (130), dans lequel ledit tube supérieur (110) s'étend au-delà du premier tube de direction (120) dans ladite direction longitudinale (L) et dans lequel le second tube de direction (130) est retenu sur le tube supérieur (110), **caractérisé en ce que** le tube supérieur (110) a une structure télescopique comprenant un élément tubulaire externe (111) et un élément tubulaire interne (112) monté, de manière coulissante, dans ledit élément tubulaire externe (111), ledit premier tube de direction (120) étant retenu sur ledit élément tubulaire externe (111) et ledit second tube de direction (130) étant retenu sur ledit élément tubulaire interne (112), et **en ce que** l'élément tubulaire interne (112) est axialement mobile par rapport à l'élément tubulaire externe (111) entre une première position étendue dans laquelle le second tube de direction (130) et la fourche (140) sont espacés du premier tube de direction (120) dans la direction longitudinale (L) et une seconde position rétractée dans laquelle le second tube de direction (130) et la fourche (140) sont à proximité du premier tube de direction (120), ladite seconde position étant plus proche du premier tube de direction (120) que la première position.

2. Cadre (100) selon la revendication 1, dans lequel dans ladite position rétractée, le second tube de direction (130) est aligné et coaxial avec le premier tube de direction (120).

3. Cadre (100) selon la revendication 2, dans lequel le premier pivot de fourche (121) et la fourche (140) comprennent des moyens de mise en prise directe configurés pour permettre leur raccordement direct mutuel, lesdits moyens de mise en prise directe comprenant au moins une partie de queue (143) s'étendant à partir de l'une des pattes (141, 142) de la fourche (140) vers le premier pivot de fourche (121) et une partie en saillie (123) qui s'étend à partir d'une partie d'extrémité (122) du premier pivot de fourche (121) vers la patte de la fourche (140) sur laquelle ladite partie de queue (143) est formée, la configuration globale du premier pivot de fourche (121) et de la fourche (140) étant telle que la partie en saillie (123) et la partie de queue (143) sont alignées et coaxiales dans la configuration rétractée du cadre (100), lesdits moyens de mise en prise directe comprenant en outre des moyens de couplage de la partie en saillie (123) et de la partie de queue (143).

4. Cadre (100) selon la revendication 3, dans lequel lesdits moyens de couplage comprennent un manchon (190), ledit manchon étant retenu, de manière coulissante, sur la partie en saillie (123) ou la partie de queue (143).

5. Cadre (100) selon l'une quelconque des revendications 1 à 4, dans lequel l'élément tubulaire interne (112) et l'élément tubulaire externe (111) du tube supérieur (110) sont configurés de sorte que leurs sections transversales respectives ont des formes correspondantes.

6. Cadre selon la revendication 5, dans lequel l'élément tubulaire interne (112) comprend au moins une rainure (113) formée sur son manteau dans la direction de son axe et l'élément tubulaire externe (111) comprend au moins un élément radialement en saillie faisant face à l'intérieur de l'élément tubulaire externe et configuré pour mettre en prise ladite rainure longitudinale (113).

7. Cadre (100) selon l'une quelconque des revendications 1 à 6, dans lequel le tube supérieur (110) est configuré de sorte que dans la position rétractée, l'élément tubulaire interne (112) fait saillie au-delà de l'élément tubulaire externe (111) dans la direction longitudinale.

8. Cadre (100) selon la revendication 7, comprenant en outre une plateforme de chargement (LP), ladite plateforme de chargement (LP) étant retenue sur la partie de l'élément tubulaire interne (112) faisant saillie au-delà de l'élément tubulaire externe (111) dans la direction longitudinale (L).

9. Cadre (100) selon la revendication 8, dans lequel ladite plateforme de chargement (LP) a une structure en accordéon comprenant une pluralité de panneaux retenus, de manière pivotante, les uns sur les autres, dans lequel un premier panneau (LP1) est retenu sur la partie de l'élément tubulaire interne (112) faisant saillie au-delà de l'élément tubulaire externe.

10. Cadre (100) selon la revendication 9, dans lequel un deuxième panneau (LP2) de la plateforme de chargement (LP) est retenu sur le premier tube de direction (120) et les autres panneaux (LP3, LP4) de la plateforme de chargement (LP) sont agencés entre ledit premier panneau (LP1) et ledit deuxième panneau (LP2), la configuration globale étant telle que dans la position rétractée du cadre, lesdits autres panneaux (LP3, LP4) viennent en butée les uns contre les autres et s'appuient sur l'un entre le premier panneau (LP1) et le second panneau (LP2), alors que dans la position étendue du cadre, les autres panneaux (LP3, LP4) s'appuient sur l'élément tubulaire interne (112) et sont sensiblement coplanaires avec le premier panneau (LP1).

11. Vélo cargo comprenant un cadre (100) selon l'une quelconque des revendications 1 à 10.
